# EUROPÄISCHE PATENTSCHRIFT

(11) **EP 3 427 983 B1**
(45) Veröffentlichungstag und Bekanntmachung des Hinweises auf die Patenterteilung: **23.03.2022**
(21) Anmeldenummer: 18182692.6
(22) Anmeldetag: 10.07.2018
(51) Int. Cl.: B64D 13/06, B63J 2/00, B60H 1/00, B64D 13/00

(54) **VERFAHREN ZUR EINMESSUNG UND ZUM BETRIEB EINES AUSSTRÖMERSYSTEMS UND AUSSTRÖMERSYSTEM**
METHOD FOR MEASUREMENT AND FOR OPERATING AN OUTFLOW VENT SYSTEM AND OUTFLOW VENT SYSTEM
PROCÉDÉ DE MESURE ET DE FONCTIONNEMENT D'UN SYSTÈME D'ÉCHAPPEMENT ET SYSTÈME D'ÉCHAPPEMENT

(30) Priorität: 13.07.2017 DE 102017115767
(43) Veröffentlichungstag der Anmeldung: 16.01.2019
(73) Patentinhaber: Dr. Schneider Kunststoffwerke GmbH, 96317 Kronach (DE)
(72) Erfinder: SCHINZLER, Claus, 96317 Kronach (DE); HÜTTEL, Bernd, 95119 Naila (DE); TRUKENBROD, Ralf, 96317 Kronach (DE)

(56) Entgegenhaltungen:
- DE-A1-102008 018 397
- US-B2- 7 084 774

## Beschreibung

Es werden ein Verfahren zur Einmessung und zum Betrieb eines Ausströmersystems eines Fahrzeugs und ein solches Ausströmersystem beschrieben. Ein Ausströmersystem eines Fahrzeugs umfasst in der Regel mindestens einen Luftausströmer, der zur Verstellung der Richtung der ausgegebenen Luft angesteuert werden kann. Zusätzlich ist in der Regel eine Klimatisierungseinrichtung vorgesehen. Die Klimatisierungseinrichtung dient zur Bereitstellung einer definierten Temperatur eines Luftstroms, der über den Luftausströmer ausgegeben wird. Weiterhin ist es möglich, über eine Klimatisierungseinrichtung die Luftfeuchtigkeit des ausgegebenen Luftstroms sowie die Schadstoffbelastung zu verändern. Weiterhin ist es möglich, Duftstoffe einem Luftstrom zuzufügen, um ein bestimmtes Belüftungserlebnis zu erzeugen.

### Stand der Technik

Luftausströmer dienen zur Ablenkung von ausgegebener Luft, die von einer Klimaanlage oder einer anderen Belüftungseinrichtung zur Verfügung gestellt wird. Bei Luftausströmern kann in der Regel neben der Steuerung der Ablenkung von ausgegebener Luft, sprich der Luftströmungsrichtung, auch die Menge an ausgegebener Luft geregelt werden. Die Menge der zugeführten Luft und damit die Menge der ausgegebenen Luft werden über eine Steuereinheit geregelt, die auch zur Luftablenkung, beispielsweise über Lamellen, vorgesehen ist. Luftausströmer können in einem Fahrzeug z.B. an einem Fahrzeugarmaturenbrett, im Bereich der A- oder B-Säule, am Dach an einem Sitz oder der Mittelkonsole eines Kraftfahrzeuges angeordnet sein. Fahrzeuge umfassen beispielsweise Kraftfahrzeuge wie PKW, LKW oder Busse, Züge, Flugzeuge oder Schiffe.

Elektrisch ansteuerbare Luftausströmer können beispielsweise Lamellen, Walzen und Einrichtungen zur Veränderung des Querschnitts eines Luftkanals etc. aufweisen, um eine Luftablenkung zu bewirken. Die einzelnen Luftausströmer können über eine gemeinsame Steuereinheit miteinander verknüpft sein, sodass eine gemeinsame Ansteuerung aller Ausströmer möglich ist.

Aus US 6,971,446 B2 ist eine Steuerung zur Luftzufuhr in einem Fahrzeug bekannt, wobei über Sensoren eine Fahrzeugbelegung erfasst und an eine Steuereinheit weitergegeben wird. In Abhängigkeit der Fahrzeugbelegung kann dann eine gezielte Luftzufuhr erreicht werden.

Um jedoch eine solche Steuerung überhaupt vornehmen zu können, muss vor der ersten Inbetriebnahme eines Ausströmersystems mit einer Vielzahl von Luftausströmern für jeden einzelnen der Luftausströmer eine Einmessung vorgenommen werden. Beispielsweise wird das Ausströmverhalten eines jeden Luftausströmers in einer Nebelkammer überprüft und dadurch eine Stellung des Luftausströmers ermittelt, welche für eine Luftzufuhr entsprechend einer Fahrzeugbelegung verwendet werden kann.

Derartige Einmessverfahren sind jedoch sehr zeitaufwendig und daher kostenintensiv. Darüber hinaus müssen die einzelnen Luftausströmer aufeinander abgestimmt werden, wobei der Aufwand bei einer manuellen Einstellung erheblich vergrößert ist.

Aus DE 10 2015 120 008 A1 ist zudem eine intelligente Klimaregelungsanlage bekannt, die Anwesenheitssensoren zum Detektieren der Anwesenheit von Personen in den Sitzen des Fahrzeugs aufweist. Ferner beinhaltet das System Lüftungsöffnungen zum Richten von klimatisierter Luft auf die detektierten Personen. Lüftungsöffnungssteuermodule steuern die Richtung von Luftströmung von den Lüftungsöffnungen als Reaktion auf Steuersignale von einem primären Controller.

DE 10 2010 049 204 A1 offenbart ferner ein Verfahren und eine Anordnung zur Optimierung der Parameter Beschallung, Beleuchtung und Klimatisierung eines Raumes nach qualitativen und quantitativen Kriterien. Dabei wird innerhalb eines definierbaren Zeitraumes ermittelt, wie viel Personen an welchem Ort des Raumes anwesend sind und entsprechend dem ermittelten Ergebnis die Beschallung, die Beleuchtung und die Klimatisierung des Raumes im Sinne von akustischer Qualität und Energieeinsparung bei der Beschallung und von Energieeinsparung bei der Beleuchtung und Klimatisierung in optimaler Weise mittels entsprechender Steuersignale eingestellt.

Ausströmer- und Belüftungssysteme aus dem Stand der Technik weisen ferner den Nachteil auf, dass diese aufgrund ihrer fest vorgegebenen Programmierung und geringen Flexibilität verschiedene Klimatisierungs- und Belüftungsszenarien nur unzureichend erfüllen können. Beispielsweise wird bei dem System aus US 6,971,446 B2 die Temperatur gemessen und in Abhängigkeit einer Fahrzeugbelegung ein Belüftungsszenario aufgerufen. Erfüllt dieses Belüftungsszenario jedoch nicht die vorgegeben Bedingungen, so führt dies höchstens zu einer Herabsetzung der ausgegebenen Luft. Dies kann von einer Person als unangenehm empfunden werden. Zudem ergeben sich hieraus gegebenenfalls weitere negative Beeinflussungen für andere Personen, sodass dieses System fortlaufend eine Nachbesserung ausführen muss.

Aus US 7,084,774 B2 ist darüber hinaus eine Ausströmeranordnung für ein Kraftfahrzeug bekannt, welche in Abhängigkeit der Hauttemperatur von Fahrgästen die Belüftung einzelner Luftausströmer verändert. Hierzu wird über eine Sensoreinrichtung, wie beispielsweise eine Kamera, die Oberflächentemperatur der Haut von Fahrgästen überwacht. Nimmt die Temperatur gegenüber einer im Vorfeld von einem Fahrgast eingestellten Wert zu, so wird die Ausströmrichtung des zugeordneten Luftausströmers verändert.

### Aufgabe

Demgegenüber besteht die Aufgabe darin ein Verfahren zur Einmessung und zum Betrieb eines Ausströmersystems sowie ein Ausströmersystem anzugeben, wobei die Nachteile des Stands der Technik behoben werden und kein zeitaufwendiges manuelles Vermessen eines Ausströmwinkels von Luftausströmern durchgeführt werden muss. Darüber hinaus sollen weitere Parameter wie z.B. Temperatur, Strömungsgeschwindigkeit, Duftstoffgehalt, und Schadstoffgehalt einstellbar sein.

### Lösung

Die Aufgabe wird durch ein Verfahren zur Einmessung und zum Betrieb eines Ausströmers eines Fahrzeugs gelöst, aufweisend eine Klimatisierungseinrichtung und mehrere ansteuerbare Luftausströmer, wobei bei erster Inbetriebnahme des Fahrzeugs ein Einmessen der Luftausströmer durchgeführt wird, um vordefinierte Klimatisierungs- und Belüftungsszenarien für verschiedene Fahrzeugbelegungen zu definieren, die entsprechend bei Eintreten der Klimatisierungs- und Belüftungsszenarien aufgerufen werden, wobei das Einmessen folgende Schritte aufweist:
- Definieren von Parametern für verschiedene Klimatisierungs- und Belüftungsszenarien, wobei die Parameter mindestens eine Zustandsgröße eines Luftstroms an mindestens einem Messpunkt im Fahrzeug umfassen,
- Ausgeben eines Luftstroms durch die Klimatisierungseinrichtung,
- Ansteuern jedes Luftausströmers einzeln,
- Messen der mindestens einen Zustandsgröße des Luftstroms an dem mindestens einen Messpunkt,
- Verändern der Luftablenkung des über die Luftausströmer ausgegebenen Luftstroms und/oder Verändern der mindestens einen Zustandsgröße des ausgegebenen Luftstroms,
- Erneutes Messen der mindestens einen Zustandsgröße des Luftstroms an dem mindestens einen Messpunkt, wobei mindestens die Ablenkung des ausgegebenen Luftstroms der Luftausströmers schrittweise verändert wird, bis mindestens alle für das jeweilige Klimatisierungs- und Belüftungsszenario relevanten Stellungen der Luftausströmer durchlaufen und für alle Stellungen die mindestens eine Zustandsgröße des Luftausströmers an dem mindestens einen Messpunkt erfasst worden ist, wobei die Stellung der Luftausströmer und die mindestens eine Zustandsgröße der ausgegebenen Luft in der Steuereinheit für ein Klimatisierungs- und Belüf tungsszenario hinterlegt werden, welche den für das entsprechende Klimatisierungs- und Belüftungsszenario vorgegebenen Parametern entsprechen,
- gemeinsames Verstellen der Luftausströmer nach der Ermittlung der Zustandsgrößen für jeden einzelnen Luftausströmer an dem mindestens einen Messpunkt, wobei anhand der für die einzelnen Luftausströmer ermittelten Stellungen und Zustandsgrößen für definierte Klimatisierungs- und Belüftungsszenarien Stellungen der Luftausströmer und Bereiche der mindestens einen Zustandsgröße des ausgegebenen Luftstroms im Vorfeld ermittelt werden, die für diese Klimatisierungs- und Belüftungsszenarien zutreffend sein werden, und
- Erfassen der mindestens einen Zustandsgröße für die vorausgewählten Stellungen der Luftausströmer an den jeweiligen Messpunkten, bis die mindestens eine Zustandsgröße den vorgegebenen Parametern entspricht, wobei die Stellung der Luftausströmer dann gespeichert wird und beim Auftreten einer entsprechenden Fahrzeugbelegung das zugehörige Belüftungsszenario im Betrieb des Fahrzeugs aufgerufen und die Luftausströmer entsprechend angesteuert werden.

Das Verfahren ermöglicht eine Zeitersparnis, da verschiedene Klimatisierungs- und Belüftungsszenarien ("Klimaerlebnis") definierbar und reproduzierbar einfach ermittelt und abgespeichert werden können. Die ermittelten Einstellungen, die für definierte Klimatisierungs- und Belüftungsszenarien gelten, können beispielsweise bei Kraftfahrzeugen für gleiche Fahrzeugtypen übernommen werden, ohne dass für jedes Fahrzeug eine erneute Vermessung erforderlich ist.

Die Klimatisierungs- und Belüftungsszenarien können sich hinsichtlich der Belegung der Sitzplätze eines Fahrzeugs, der Größe mindestens einer Person, des Gewichts mindestens einer Person und/oder der im Bereich der Sitzplätze vorherrschenden Temperaturen unterscheiden. Ferner können verschiedene Luftgeschwindigkeiten der ausströmenden Luft an einem Messpunkt sowie die Luftfeuchtigkeit an einem Messpunkt ein Klimatisierungs- und Belüftungsszenario definieren. In weiteren Ausführungsformen können auch die Sonneneinstrahlung sowie die Außentemperatur Auswirkungen auf ein Klimatisierungs- und Belüftungsszenario aufweisen. Weiterhin kann auch die Belegung bzw. Füllung eines Kofferraums ein Klimatisierungs- und Belüftungsszenario definieren.

Um eine Belüftung bzw. Klimatisierung eines Fahrgastraumes eines Fahrzeugs durchführen zu können, müssen für verschiedene Klimatisierungs- und Belüftungsszenarien Parameter definiert werden. Die Parameter geben beispielsweise an, welche Temperatur, welche Luftgeschwindigkeit und welche Luftfeuchtigkeit an entsprechenden Messpunkten und Bereichen im Fahrgastraum vorherrschen sollen. Zur Ermittlung der Einstellungen des Luftausströmers und der Klimatisierungseinrichtung, um diese Zustände erreichen zu können, wird der Luftausströmer so angesteuert, dass dieser sämtliche Ausströmwinkel bzw. Stellungen einnehmen kann. Zudem wird ein definierter Luftstrom ausgegeben, der beispielsweise eine bestimmte Luftgeschwindigkeit und Lufttemperatur sowie Luftfeuchtigkeit aufweisen kann. Anschließend wird zumindest die Temperatur des Luftstroms an einem definierten Messpunkt erfasst. Da der Luftausströmer während des Einmessverfahrens seine Ausströmrichtung verändert, verändern sich zwangsläufig auch die gemessenen Werte an dem mindestens einen Messpunkt. Anschließend wird bestimmt, bei welcher Stellung des Luftausströmers die gemessenen Werte den Werten des Parameters entsprechen. Entsprechen bedeutet in diesem Zusammenhang, dass die zumindest eine Zustandsgröße (z.B. Temperatur) gleich den vorgegebenen Werten (Parametern) ist oder diesen am nächsten kommt. Gleiches gilt für weitere Parameter, wie beispielsweise Luftgeschwindigkeit, Luftfeuchtigkeit, etc.

Um anschließend eine Auswertung der erfassten Werte der mindestens einen Zustandsgröße hinsichtlich der vorgegebenen Werte der Parameter für die verschiedenen Klimatisierungs- und Belüftungsszenarien durchführen zu können, werden die gemessenen Werte in der Steuereinheit zwischengespeichert.

Tritt im Betrieb eines Ausströmersystems eines Fahrzeugs ein bestimmtes Klimatisierungs- und Belüftungsszenario ein, so wird in Abhängigkeit der für dieses Klimatisierungs- und Belüftungsszenario hinterlegten Einstellungen des Luftausströmers und der Klimatisierungseinrichtung eine Luftzufuhr eingestellt.

Zusätzlich können die Geschwindigkeit und/oder die Menge der über den mindestens einen Luftausströmer ausgegebenen Luft und/oder die Luftfeuchtigkeit der ausgegebenen Luft schrittweise verändert und gemessen werden. Die mindestens eine Zustandsgröße umfasst nicht abschließend bspw. die Temperatur, die Geschwindigkeit, die Luftfeuchtigkeit, den Schadstoffgehalt, den Duftstoffgehalt und/oder die Menge der über den mindestens einen Luftausströmer ausgegebenen Luft. Bei dem Verfahren kann zusätzlich zu einer ersten Zustandsgröße eine weitere Zustandsgröße der ausgegebenen Luft schrittweise verändert und gemessen werden.

Weiterhin kann nach Maßgabe des jeweiligen, vorhandenen Klimatisierungs- und Belüftungsszenarios, welches unter Verwendung von Sensoreinrichtungen durch die Steuereinheit bestimmt wird, die Klimatisierungseinrichtung und der mindestens eine Luftausströmer gemäß der für das entsprechende Klimatisierungs- und Belüftungsszenario hinterlegten Stellung des mindestens einen Luftausströmers und der Temperatur der ausgegebenen Luft angesteuert werden.

Das Einmessen des Ausströmersystems kann mittels einer Robotik durchgeführt werden. Die Robotik weist ein Messsystem auf, welches im Raum verfahren werden kann. Hierüber können an verschiedenen Messpunkten beispielsweise die Temperatur, die Strömungsgeschwindigkeit der Luft, die Luftfeuchtigkeit und auch eine Schadstoffkonzentration der Luft im Messpunkt erfasst werden. Ein solches Messsystem kann Laserscanner, Kameras, Temperaturfühler, Strömungsmesser etc. aufweisen. Vorzugsweise kann das Messsystem derart verfahren werden, dass dieses eine Messebene bildet, die den Fahrgastraum schneidet. Die Messebene kann dann ausgehend von der Windschutzscheibe bis zum Kofferraum verfahren werden und an den Messpunkten die Werte aufnehmen. Das Einmessen und Regeln kann auch am und durch einen Probanden/Nutzer individuell erfolgen. Das Messsystem kann hierfür z.B. auch IR-Kameras aufweisen und verwenden.

Im Betrieb des Ausströmersystems ist es hingegen nicht möglich, ein verfahrbares Messsystem zu verwenden. Aus diesem Grund werden im Bereich der entsprechenden Messpunkte Sensoreinrichtungen vorgesehen, welche nicht verfahren werden müssen und nicht in den Fahrgastraum störend eingreifen oder abstehen. Beispielsweise können Temperaturfühler, Kameras oder Scanner sowie Strömungsmesser im Bereich der Messpunkte angeordnet sein.

Die für verschiede Klimatisierungs- und Belüftungsszenarien definierten Parameter sowie deren Werte und die hierzu ermittelten Einstellungen der Klimatisierungseinrichtung und des mindestens einen Luftausströmers können in einem mit der Steuereinheit verbundenen Speicher hinterlegt werden, wobei im Betrieb des Ausströmersystems Änderungen an der Ausrichtung des über den mindestens einen Luftausströmer ausgegebenen Luftstroms und/oder der mindestens einen Zustandsgröße der ausgegebenen Luft für ein Klimatisierungs- und Belüftungsszenario vorgenommen werden können, wenn die an mindestens einem Messpunkt erfassten Werte der mindestens einen Zustandsgröße nicht mehr den durch das entsprechende Klimatisierungs- und Belüftungsszenario vorgegebenen Werten der Parameter entsprechen, und die Einstellungen dieser Änderungen die Stellung des mindestens einen Luftausströmers und die mindestens eine Zustandsgröße der ausgegebenen Luft für das Klimatisierungs- und Belüftungsszenario ersetzen.

Im Betrieb des Ausströmersystems können Abweichungen der ermittelten Werte der mindestens einen Zustandsgröße von den durch die Parameter vorgegebenen Werten an den entsprechenden Messpunkten auftreten. Damit das ursprüngliche Klimatisierungs- und Belüftungsszenario im Wesentlichen unverändert bzw. definiert eingestellt und aufrechterhalten werden kann, kann eine Änderung mindestens einer Einstellung erforderlich sein. Beispielsweise können die Änderungen ein Herabsetzen oder Erhöhen der Temperatur und/oder eine Änderung der Stellung mindestens eines Luftausströmers bewirken. Werden über die Sensoreinrichtungen nach der Änderung wieder die Werte im Messpunkt ermittelt, die den Werten der Parameter entsprechen, so übernimmt die Steuereinheit für das Klimatisierungs- und Belüftungsszenario die neue Stellung eines Luftausströmers und/oder einer Klimatisierungseinrichtung. Das Ausströmersystem ist daher lernfähig ausgebildet. Darüber hinaus können Änderungen in einem Klimatisierungs- und Belüftungsszenario auch nur dann vorgenommen werden, wenn beispielsweise bestimmte äußere Zustände vorliegen. Solche äußeren Zustände können beispielsweise eine Sonneneinstrahlung unter einem bestimmten Winkel und/oder eine bestimmte Sonneneinstrahlung sein.

Weiterhin können manuelle Eingaben einer Bedienperson zur Veränderung der Zustände eines Klimatisierungs- und Belüftungsszenarios als Änderung der gespeicherten Einstellungen für das entsprechende Klimatisierungs- und Belüftungsszenario übernommen werden, wenn eine Überschreibung durch die Bedienperson aktiviert wird und/oder die Veränderungen dieses Klimatisierungs- und Belüftungsszenarios mit im Wesentlichen gleichen Veränderungen eine festlegbare Häufigkeit übersteigen.

Der Luftausströmer und die Klimatisierungseinrichtung können elektronisch ansteuerbar ausgebildet sein. Beispielsweise kann ein Fahrzeug ein Bedienfeld aufweisen, über welches der Luftausströmer und die Klimatisierungseinrichtung steuerbar sind. Nimmt eine Bedienperson im Betrieb des Ausströmersystems eine Änderung eines aktuell vorliegenden Klimatisierungs- und Belüftungsszenarios vor, so kann beispielsweise ein Verstellen eines Luftausströmers oder eine Änderung mindestens einer Zustandsgröße (z.B. der Temperatur) der über die Klimatisierungseinrichtung ausgegebenen Luft erfolgen. Die Bedienperson kann mittels einer Eingabe nunmehr festlegen, dass die vorgenommene Änderung die Stellung der Klimatisierungseinrichtung und/oder des Luftausströmers für dieses Klimatisierungs- und Belüftungsszenario übernehmen soll. Die Änderung wird gespeichert und beim nächsten Aufruf des Klimatisierungs- und Belüftungsszenarios wird das Ausströmersystem mit den geänderten Stellungen betrieben.

Weiterhin ist es möglich, dass eine Bedienperson im Betrieb des Ausströmersystems ein bestehendes Klimatisierungs- und Belüftungsszenario derart ändert, dass beispielsweise die Stellung eines bestimmten Luftausströmers in einer definierten Art und Weise verändert wird. Die Bedienperson wählt kein Speichern dieser Änderung und beim nächstmaligen Aufrufen und Ausströmen der Luft gemäß dieses Klimatisierungs- und Belüftungsszenarios werden wieder die ursprünglichen Stellungen vorgenommen. Wird nunmehr von der Bedienperson wieder die gleiche Änderung für den bestimmten Luftausströmer vorgenommen, so erkennt die Steuereinheit das Vorhandensein einer im Wesentlichen gleichen Änderung für eine bestimmte Komponente. In Abhängigkeit der Ausbildung der Steuereinheit kann nunmehr sofort ein Überschreiben der Stellung dieses Luftausströmers für das entsprechende Klimatisierungs- und Belüftungsszenario durchgeführt werden. Beispielsweise kann eine solche Änderung dann vorgenommen werden, wenn eine im Wesentlichen gleiche Änderung direkt hintereinander durchgeführt wird. Es ist aber auch möglich, dass beispielsweise bei zehn Aufrufen des Klimatisierungs- und Belüftungsszenarios eine Änderung vorgenommen wird, wenn viermal, fünfmal, oder beispielsweise sechsmal eine Änderung vorgenommen wurde, wobei in den anderen Betriebsarten keine Änderung vorgenommen wurde. Die Häufigkeit lässt sich im Vorfeld einstellen, kann aber auch durch eine Bedienperson nachträglich geändert werden. Darüber hinaus ist es möglich, ein Zurücksetzen einzelner oder sämtlicher Klimatisierungs- und Belüftungsszenarien auf ihre ursprünglichen Werte durchzuführen.

Weiterhin kann eine Änderung, die für eine definierte Einstellung, welche in den gespeicherten Klimatisierungs- und Belüftungsszenarien enthalten ist, in mindestens zwei Klimatisierungs- und Belüftungsszenarien vorgenommen worden ist und eine Änderung der gespeicherten Einstellungen verursacht hat, in entsprechender Weise für alle weiteren Klimatisierungs- und Belüftungsszenarien übernommen und die geänderten Einstellungen gespeichert werden.

Beispielsweise kann im Betrieb des Ausströmersystems beim Vorliegen eines ersten Klimatisierungs- und Belüftungsszenarios von einer Bedienperson oder von der Steuereinheit selbst eine Änderung, beispielsweise der Stellung eines Luftausströmers, vorgenommen werden. Ändert sich nun beispielsweise die Belegung des Fahrzeugs und es wird ein zweites Klimatisierungs- und Belüftungsszenario aufgerufen und es wird durch die Bedienperson oder die Steuereinheit die gleiche Änderung für den gleichen Luftausströmer durchgeführt, so kann von der Steuereinheit automatisch eine entsprechende Änderung dieses Luftausströmers in sämtlichen gespeicherten Klimatisierungs- und Belüftungsszenarien vorgenommen werden. In weiteren Ausführungsformen kann auch eine Änderung in mindestens 3, 4 oder mehr Klimatisierungs- und Belüftungsszenarien erforderlich sein, damit sämtliche Klimatisierungs- und Belüftungsszenarien überschrieben werden.

Während der Änderung der Ablenkung der ausgegebenen Luft über den mindestens einen Luftausströmer kann eine Luftablenkung in eine Richtung unterbrochen werden, wenn eine zunehmende Abweichung der an dem mindestens einen Messpunkt gemessenen mindestens einen Zustandsgröße (z.B. Temperatur) von den für ein Klimatisierungs- und Belüftungsszenario zugehörigen Werten der Parameter durch die Steuereinheit festgestellt wird. Beim Einmessen des Luftausströmersystems werden in der Regel die Luftausströmer so betrieben und angesteuert, dass diese alle möglichen Stellungen durchlaufen. Für jede Stellung der Luftausströmer werden am Messpunkt die Werte erfasst. Ergibt sich während der Messung jedoch eine zunehmende Abweichung der gemessenen Werte von den Werten, die durch die Parameter des entsprechenden Klimatisierungs- und Belüftungsszenarios vorgegeben sind, so wird die Ansteuerung der Luftausströmer derart unterbrochen, dass eine weitere Luftablenkung in der Richtung nicht durchgeführt wird. Hierdurch wird das Einmessverfahren weiter verkürzt.

Weiterhin kann die mindestens eine Zustandsgröße an einem ersten Messpunkt und an einem zweiten Messpunkt gemessen werden und anschließend eine Änderung der Stellung des mindestens einen Luftausströmers durchgeführt werden oder es kann für einen ersten Messpunkt die mindestens eine Zustandsgröße gemessen und anschließend eine Änderung der Stellung des mindestens einen Luftausströmers durchgeführt werden und danach für mindestens einen zweiten Messpunkt die mindestens eine Zustandsgröße gemessen und anschließend eine Änderung der Stellung des mindestens einen Luftausströmers durchgeführt werden.

Während des Einmessens des Ausströmersystems kann daher entweder die Auswirkung der verschiedenen Stellungen des Luftausströmers an einer Vielzahl von Messpunkten erfasst werden, bevor eine weitere Änderung der Stellung des Luftausströmers und beispielsweise eine Änderung der Temperatur auftritt oder aber es erfolgt für jeden Messpunkt ein Durchlaufen sämtlicher Stellungen und gegebenenfalls Temperaturen.

Bei dem Verfahren werden zuerst für jeden einzelnen Luftausströmer an den verschiedenen Messpunkten die Werte ermittelt. Anschließend werden mehrere Luftausströmer gemeinsam verstellt, wobei anhand der für die einzelnen Luftausströmer ermittelten Werte für definierte Klimatisierungs- und Belüftungsszenarien beispielsweise Verschwenk- und Temperaturbereiche im Vorfeld ermittelt werden, die für diese Klimatisierungs- und Belüftungsszenarien zutreffend sein werden. Danach müssen die Luftausströmer nur noch in einem geringeren Bereich verschwenkt werden, um die optimale Stellung zum Erreichen der erforderlichen Werte an den Messpunkten zu erreichen.

Zur Ermittlung der Einstellungen für verschiedene Klimatisierungs- und Belüftungsszenarien kann ein Messsystem verwendet werden, welches einen Laserscanner, eine Kamera, mindestens einen Temperaturfühler, mindestens einen Strömungsmesser, einen Sensor von sog. "Smart Devices" und/oder Sensoren zur Detektion des vitalen und/oder psychischen Empfinden eines Passagiers aufweist. Als "Smart Devices" werden elektronische Geräte bezeichnet, die kabellos, mobil, vernetzt und mit verschiedenen Sensoren (z. B. Geosensoren, Gyroskopen, Temperaturmesseinrichtungen oder Kameras) ausgestattet sind. "Smart Devices" umfassen bspw. Smartphones, Tablet-PCs und Datenbrillen.

Ferner kann im Betrieb des Ausströmersystems eine Belegung des Fahrzeugs bzw. der Sitzplätze über eine Kamera erfasst werden. Die Kamera überwacht den Innenraum und kann beispielsweise feststellen, ob die Sitzplätze belegt sind. Ferner können über die Kamera eine Größe oder Temperaturprofile von Personen oder Personen selbst erfasst werden. Auch eine Sitzplatzbelegung über herkömmliche Sensoren, die für eine Gurtkontrolle verwendet werden, können herangezogen werden, um beispielsweise die Sitzbelegung zu erfassen. Ebenso kann ein Kofferraum so überwacht werden. Ferner kann über eine Kamera beispielsweise auch erfasst werden, ob beispielsweise ein Tier im Kofferraum transportiert wird. Diese verschiedenen Kriterien sind maßgeblich für die Auswahl eines entsprechenden Klimatisierungs- und Belüftungsszenarios.

Die Aufgabe wird ebenfalls durch ein Ausströmersystem für ein Fahrzeug gelöst, mindestens aufweisend einen Luftausströmer, eine Steuereinheit, einen Speicher, eine Klimatisierungseinrichtung und Sensoreinrichtungen, wobei
- in dem Speicher Parameter mindestens eines Klimatisierungs- und Belüftungsszenarios und Einstellungen von mindestens einem Luftausströmer und der Klimatisierungseinrichtung für verschiedene Klimatisierungs- und Belüftungsszenarien hinterlegt sind,
- die Steuereinheit dazu ausgebildet ist, anhand von Messungen durch die Sensoreinrichtungen an mindestens einem Messpunkt die Einstellungen für den mindestens einen Luftausströmer und die Klimatisierungseinrichtung zu ermitteln und die Einstellungen anzupassen,
- die Steuereinheit dazu ausgebildet ist, die Einstellungen in dem Speicher zu hinterlegen, welche den Parametern für die verschiedenen Klimatisierungs- und Belüftungsszenarien entsprechen, und
- die Klimatisierungseinrichtung und der mindestens eine Luftausströmer nach Maßgabe der gespeicherten Einstellungen betreibbar sind.

Die vorstehend gemachten Ausführungen geltend entsprechend auch für das Ausströmersystem für ein Fahrzeug.

Bei der hierin beschriebenen technischen Lehre wird ein Klimaerlebnis (Klimatisierungs- und Belüftungsszenario) im Fahrzeug bezogen auf die Schnittachse definiert, welches beispielsweise eine Temperatur, einen Luftstrom usw. umfassen kann. Das Ausströmersystem umfasst mindestens einen Luftausströmer, eine Klimatisierungseinrichtung und ist so ausgebildet, dass über eine Steuereinheit die Verstelleinrichtungen der Luftausströmer angesteuert werden können. Beispielsweise werden für eine erste Position die Messdaten erfasst und anschließend die Stellung der Verstelleinrichtung verändert und ein erneutes Messen durchgeführt. Aufgrund der Änderung kann das Ausströmersystem erkennen, ob die Verstellung richtig oder falsch war und leitet daraus die nächste Bewegung ab. Wenn das gewünschte definierte Klimaerlebnis an diesem Messpunkt erreicht ist, werden die Werte abgespeichert und der nächste Messpunkt angefahren. Wenn alle definierten Messpunkte auf der Ebene optimiert sind, werden die Werte fest im Speicher der Steuereinheit abgespeichert. Dies kann für einen oder für mehrere Luftausströmer erfolgen. Weiterhin können ein oder mehrere Messpunkte definiert werden.

Durch diese Messmethodik ist es möglich, dasselbe Empfinden in einem anderen Fahrzeug darzustellen.

Luftausströmer in Fahrzeugen können wie in der Einleitung angegeben, an verschiedenen Positionen in einem Fahrzeug angeordnet sein. Hierdurch ergibt sich eine große Verstellmöglichkeit und Einstellbarkeit verschiedener Klimatisierungs- und Belüftungsszenarien.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Figuren

In den Zeichnungen zeigt:
- Fig. 1: eine schematische Darstellung eines Fahrzeuginnenraums mit einem Ausströmersystem in Seitenansicht;
- Fig. 2: eine schematische Darstellung eines Fahrzeuginnenraums mit einem Ausströmersystem in Draufsicht; und
- Fig. 3: ein schematisches Ablaufdiagramm zur Einmessung und zum Betrieb eines Ausströmersystems eines Fahrzeugs.

In den Zeichnungen mit gleichen Bezugszeichen versehene Komponenten entsprechen im Wesentlichen einander, sofern nichts anderes angegeben ist. Darüber hinaus wird darauf verzichtet Bestandteile zu zeigen und zu beschreiben, welche nicht wesentlich zum Verständnis der hierin offenbarten technischen Lehre sind.

### Ausführliche Beschreibung von Ausführungsbeispielen

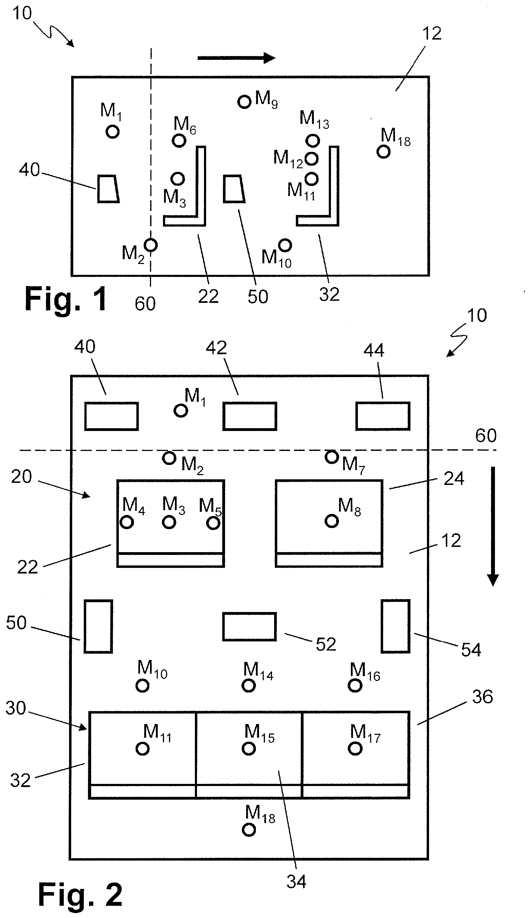

Fig. 1 zeigt eine schematische Darstellung eines Fahrzeuginnenraums 12 mit einem Ausströmersystem 10 in Seitenansicht. In dem Fahrzeuginnenraum befinden sich eine Vielzahl von Einrichtungen und Komponenten, wie beispielsweise ein Armaturenbrett mit einem Lenkrad und Steuereinrichtungen, Fahrzeuggurte, Verkleidungsteile, sowie die in Fig. 1 dargestellten Luftausströmer 40 und 50 und ein Fahrersitz 22 und ein Sitz 32 einer hinteren Sitzreihe 30.

Fig. 2 zeigt eine schematische Darstellung des Fahrzeuginnenraums 12 mit einem Ausströmersystem 10 in Draufsicht.

In der vorderen Sitzreihe 20 befindet sich neben dem Fahrersitz 22 ein Beifahrersitz 24. In der hinteren Sitzreihe 30 befindet sich neben dem linken Sitz 32 ein mittlerer Sitz 34 und rechter Sitz 36. Der Luftausströmer 40 befindet sich auf der linken Seite im vorderen Abschnitt. Ferner sind in diesem Bereich zwei weitere Luftausströmer 42 und 44 angeordnet. Hinter den Sitzen der vorderen Sitzreihe 20 befinden sich drei Luftausströmer 50, 52 und 54, die insbesondere für eine Luftzufuhr auf die hintere Sitzreihe 30 ausgebildet sind.

Die Luftausströmer 40, 42, 44, 50, 52 und 54 können über jeweils mindestens eine Verstelleinrichtung derart verstellt werden, dass diese die Richtung der ausgegebenen Luft verändern. Hierzu sind die Luftausströmer 40, 42, 44, 50, 52 und 54 mit einer Steuereinheit (in der Figur nicht dargestellt) verbunden. Die Steuereinheit weist einen Speicher auf, in welchem für verschiedene Klimatisierungs- und Belüftungsszenarien Stellungen der Luftausströmer 40 - 54 gespeichert sind. Zudem ist die Steuereinheit mit einer Klimatisierungseinrichtung verbunden, wobei die Klimatisierungseinrichtung über Kanäle Luft zu den Luftausströmern 40 - 54 führt. Über die Klimatisierungseinrichtung kann die Luft erwärmt oder gekühlt und hinsichtlich der Luftfeuchtigkeit verändert werden. Zusätzlich kann die Schadstoffkonzentration der über die Luftausströmer 40 - 54 ausgegebenen Luft durch entsprechende Filtereinrichtungen in den Kanälen und/oder der Klimatisierungseinrichtung verändert werden.

Die verschiedenen Klimatisierungs- und Belüftungsszenarien unterscheiden sich beispielsweise hinsichtlich der Belegung eines Fahrzeugs. Die Belegung des Fahrzeugs gibt an, auf welchen der Sitze sich Personen befinden und gegebenenfalls wie groß diese Personen sind sowie das Temperaturprofil der Person. Die Klimatisierungs- und Belüftungsszenarien können sich ferner dahingehend unterscheiden, ob und gegebenenfalls in welchem Umfang der Kofferraum beladen ist. Weitere Kriterien umfassen eine Außentemperatur, eine Sonneneinstrahlung sowie eine Schadstoffbelastung und beispielsweise die Tageszeit. Zu den einzelnen vorherrschenden Klimatisierungs- und Belüftungsszenarien können dann verschiedene Werte für Parameter eingestellt werden. Die Parameter umfassen beispielsweise die Temperatur, welche im Bereich des Fahrersitzes 22 vorherrschen soll. Ferner umfassen die Parameter beispielsweise die Strömungsgeschwindigkeit der Luft im Bereich des Beifahrersitzes 24. Ferner können die Parameter weitere definierte Temperaturen, Luftgeschwindigkeiten, Luftfeuchtigkeitswerte etc. an verschiedenen Positionen im Fahrzeug umfassen. Die einzelnen Zustände (Temperatur, Luftfeuchtigkeit, Luftgeschwindigkeit, etc.) definieren dann jeweils ein Klimatisierungs- und Belüftungsszenario. Um ein solches Klimatisierungs- und Belüftungsszenario zu erreichen, müssen die Luftausströmer 40 - 54 und die Klimatisierungseinrichtung in entsprechender Weise angesteuert werden, damit eine Luftablenkung über die Luftausströmer 40 - 54 mit einer definierten Lufttemperatur an den jeweiligen Bereichen auftritt. Den einzelnen Klimatisierungs- und Belüftungsszenarien sind daher Stellungen der Luftausströmer 40 - 54 und eine voreingestellte Temperatur, die über die Klimatisierungseinrichtung bereitgestellt werden soll, zugeordnet.

Zur Ermittlung derartiger Stellungen der Luftausströmer 40 - 54 und der Klimatisierungseinrichtung muss vorab ein Einmessen des Ausströmersystems 10 durchgeführt werden. Hierzu kann eine Robotik verwendet werden, die ein Messsystem aufweist und dieses im Fahrzeuginnenraum verfährt. Beispielsweise kann das Messsystem entlang der Messebene 60 in Richtung der Pfeile ausgehend von einer Windschutzscheibe in Richtung des Kofferraums verfahren werden.

Für ein Klimatisierungs- und Belüftungsszenario wird an verschiedenen Positionen beispielsweise eine definierte Temperatur und eine definierte Luftgeschwindigkeit festgelegt. Beispielsweise werden hierzu Messpunkte M1 - M18 festgelegt, wobei an diesen Messpunkten M1 - M18 ebenfalls Messungen durchgeführt werden. Die Messung kann unter Verwendung eines Laserscanners, einer Kamera, mindestens eines Temperaturfühlers und/oder mindestens eines Strömungsmessers erfolgen. Zuerst wird jeder der Luftausströmer 40 - 54 in sämtlichen Stellungen betrieben, wobei die Luftgeschwindigkeiten an den verschiedenen Messpunkten M1 - M18 erfasst werden. Die verschiedenen Stellungen der Luftausströmer 40 - 54 umfassen sämtliche Stellungen, die ein Luftausströmer in Betrieb einnehmen kann. Zu jeder dieser Stellung der Luftausströmer 40 - 54 wird mindestens eine Zustandsgröße, im dargestellten Beispiel die Temperatur und die Luftgeschwindigkeit, in den Messpunkten M1 - M18 erfasst. Hierzu verfährt das Messsystem entlang der Messebene 60 entlang des Fahrzeuginnenraums 12. Anschließend können die Luftausströmer 40 - 54 gemeinsam zur Einstellung einer Luftablenkung verschwenkt werden, um an verschiedenen Messpunkten M1 - M18 die definierten Werte, die durch die Klimatisierungs- und Belüftungsszenarien vorgegeben sind, zu erreichen. Das Einmessen der einzelnen Luftausströmer 40 - 54 im Vorfeld ermöglicht der Steuereinheit vorab eine wahrscheinliche Ausrichtung der Luftausströmer anzugeben, die zur Erfüllung der vorgegebenen Werte wahrscheinlich sind. Anschließend werden die einzelnen Luftausströmer 40 -. 54 gemeinsam verstellt und die Werte an den jeweiligen Messpunkten M1 - M18 erfasst, bis diese den vorgegebenen Werten entsprechen. Die Stellung der Luftausströmer 40 - 54 wird dann gespeichert. Wird nunmehr dieses Belüftungsszenario im Betrieb des Fahrzeugs aufgerufen, beispielsweise weil über eine Kamera ein derartiges Belüftungsszenario erfasst wurde, so greift die Steuereinheit auf die im Speicher für dieses Klimatisierungs- und Belüftungsszenario hinterlegten Daten zu und steuert die Luftausströmer 40 - 54 so an, dass diese die hierfür abgelegten Stellungen einnehmen.

Die verschiedenen Klimatisierungs- und Belüftungsszenarien können sich hinsichtlich der Fahrzeugbelegung unterscheiden, wobei zusätzlich eine Unterscheidung hinsichtlich der Größe und/oder des Temperaturprofils der Personen möglich ist. Befinden sich keine Personen auf den Sitzen 32, 34 und 36 der hinteren Sitzreihe 30, so müssen die Luftausströmer 50, 52, 54 nicht oder anders verstellt werden, als wenn beispielsweise nur einer der Sitze 32, 34 und 36 oder alle dieser Sitze 32, 34 und 36 belegt wären. Zudem müssen die Luftausströmer 50, 52 und 54 anders verstellt werden, wenn beispielsweise anstatt einer erwachsenen Person ein Kind auf dem Sitz 32 Platz nimmt. Für einen Erwachsenen kann beispielsweise eine Luftzufuhr notwendig sein, wobei für den Messpunkt M13 eine entsprechende Belüftung erforderlich ist. Bei einem Kind, dessen Kopf sich im Wesentlichen im Bereich des Messpunktes M12 befindet, kann sich für diesen Bereich eine andere Belüftung ergeben.

Bei dem Einmessverfahren werden verschiedene Klimatisierungs- und Belüftungsszenarien berücksichtigt und für die jeweiligen Klimatisierungs- und Belüftungsszenarien Stellungen der Luftausströmer 40 - 54 und der Klimatisierungseinrichtung gespeichert. Wird das Fahrzeug in Betrieb genommen und über beispielsweise eine Kamera festgestellt, dass ein definierter Fahrzeugbelegungszustand auftritt, greift die Steuereinheit auf die gespeicherten Einstellungen zurück und bewirkt eine Ansteuerung der Luftausströmer 40 - 54 gemäß des erkannten Klimatisierungs- und Belüftungsszenarios. Steigt beispielsweise eine Person zu und setzt sich auf den Sitz 36, so ändert sich das Klimatisierungs- und Belüftungsszenario. Die Steuereinheit erkennt über die Kamera eine Änderung und greift nunmehr auf die Stellungen für die Luftausströmer 40 - 45 zu, die diesem Klimatisierungs- und Belüftungsszenario entsprechen.

Sollten sich im Betrieb des Ausströmersystems 10 Änderungen ergeben, so können diese manuell von einer Bedienperson über beispielsweise ein Bedienfeld eingegeben werden. Die Bedienperson kann ferner die Änderung derart vornehmen, dass die hinterlegten Stellungen im Speicher überschrieben werden. Darüber hinaus kann die Steuereinheit selbstständig ein Überschreiben vornehmen, wenn beispielsweise bei verschiedenen Klimatisierungs- und Belüftungsszenarien die Stellung beispielsweise des Luftausströmers 42 immer in der gleichen Weise verändert wird. Dementsprechend dürften dann auch die Stellungen des Luftausströmers 42 in ähnlichen oder gleichen Klimatisierungs- und Belüftungsszenarien verändert werden.

Ergeben sich im Betrieb des Ausströmersystems 10 Abweichungen an einem der Messpunkte M1 - M18 von den festgelegten Zuständen, wobei durch das entsprechende Klimatisierungs- und Belüftungsszenario jedoch der Zustand erreicht werden soll, so kann die Steuereinheit eine Änderung der Stellung einer der Luftausströmer 40 - 54 und/oder der Klimatisierungseinrichtung vornehmen, bis der ursprünglich definierte Zustand erreicht ist. Diese Änderung kann von der Steuereinheit selbstständig im Speicher durch Überschreiben gespeichert werden, sodass beim Aufruf des gleichen Klimatisierungs- und Belüftungsszenarios zu einem späteren Zeitpunkt keine Abweichung mehr auftritt.

Um im Betrieb des Fahrzeugs und des Ausströmersystems 10 eine solche Überprüfung durchführen zu können, sind im Fahrzeug Sensoreinrichtungen angeordnet, welche beispielsweise die Luftgeschwindigkeit, die Temperatur der ausgegebenen Luft und die Luftfeuchtigkeit sowie eine Schadstoffbelastung messen können. Zudem kann die Steuereinheit auf bereits bestehende Sensoreinrichtungen im Fahrzeug zurückgreifen, die beispielsweise die Fahrzeugbelegung durch Abfragen der Belegungssensoren für eine Gurtanzeige ermitteln.

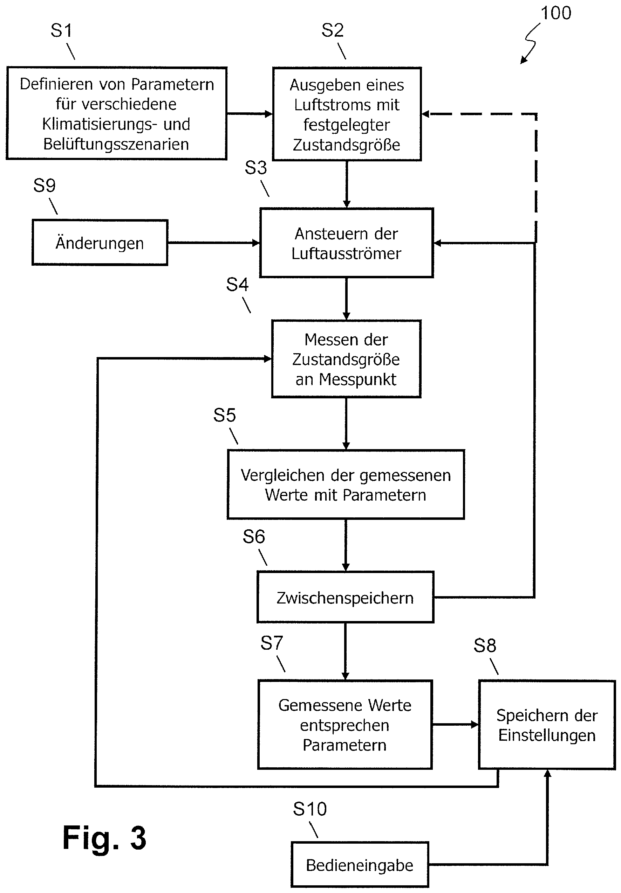

Fig. 3 zeigt ein schematisches Ablaufdiagram 100 zur Einmessung und zum Betrieb eines Ausströmersystems 10 eines Fahrzeugs.

In Schritt S1 erfolgt ein Definieren von Parametern für verschiedene Klimatisierungs- und Belüftungsszenarien. Die Parameter umfassen beispielsweise die Temperatur, die Luftgeschwindigkeit und die Luftfeuchtigkeit oder auch Schadstoffgrenzwerte oder Duftintensität, die an verschiedenen Bereichen im Fahrzeug auftreten sollen. Die Summe aller vorgegebenen Werte dieser Parameter definieren damit ein Klimatisierungs- und Belüftungsszenario für eine bestimmte Fahrzeugbelegung. Es können für das Ausströmersystem 10 mehrere Klimatisierungs- und Belüftungsszenarien in Abhängigkeit der Fahrzeugbelegung abgespeichert und definiert werden. In einem Schritt S2 erfolgt das Ausgeben eines Luftstroms mit festgelegten Zustandsdaten bzw. Zustandsgrößen. Anschließend erfolgt in Schritt S3 ein Ansteuern der Luftausströmer, wobei zuerst jeder der Luftausströmer einzeln angesteuert wird, bis dieser sämtliche Luftablenkungen, die aufgrund seiner Ausbildung möglich sind, durchlaufen hat.

In Schritt S4 erfolgt ein Messen der Zustandsdaten und der Geschwindigkeit an einem Messpunkt für jede der Stellungen der jeweiligen Luftausströmer 40 - 54.

In einem Schritt S5 erfolgt ein Vergleichen der gemessenen Werte mit den Werten für die Parameter eines entsprechenden Klimatisierungs- und Belüftungsszenarios.

In einem Schritt S6 erfolgt ein Zwischenspeichern der Werte und anschließend ein erneutes Ansteuern der Luftausströmer, um die Stellung bzw. Luftablenkung der Luftausströmer zu verändern. Die geänderte Luftablenkung bewirkt gegebenenfalls eine Veränderung der Zustandsdaten und der Geschwindigkeit an einem Messpunkt.

Anschließend erfolgt wiederum ein Vergleichen der gemessenen Werte mit den Parametern in einem Schritt S5 und ein Zwischenspeichern in einem Schritt S6. Sind alle verschiedenen Stellungen der Luftausströmer 40 - 54 durchlaufen worden und für jede dieser Stellungen sind die entsprechenden Werte erfasst und mit den hinterlegten Werten der Parameter verglichen worden, werden die Einstellungen der Luftausströmer 40 - 45 in einem Speicher der Steuereinheit hinterlegt, für welche die gemessenen Werte den Werten entsprechen, die durch die Parameter vorgegeben sind (Schritt S7).

Ein zusätzlicher Algorithmus kann entscheiden, welche Positionen relevant sind und was der nächste sinnvolle Schritt der Messung ist und so die nötigen anzufahrenden Positionen optimieren und dadurch Zeit sparen.

Sind alle Stellungen des Luftausströmers 40 -54 durchlaufen und für die verschiedenen Stellungen die Werte ermittelt worden, wobei keiner dieser Werte den Werten der Parameter entspricht, kann zusätzlich eine Veränderung der Zustandsdaten des ausgegebenen Luftstroms erfolgen. Dies ist in Fig. 3 durch die gestrichelte Linie dargestellt.

Bei dem Verfahren kann auch über eine Bedieneingabe in einem Schritt S10 eine direkte Änderung der Stellung der Luftausströmer 40 -54 durchgeführt werden, welche eine bereits gespeicherte Stellung einer der Luftausströmer 40 -54 überschreibt.

Weiterhin können Änderungen in einem Schritt S9 auftreten, die eine entsprechende Ansteuerung der Luftausströmer 50 - 54 bewirken. Eine solche Änderung kann sich beispielsweise ergeben, wenn im Betrieb des Ausströmersystems 10 eine Abweichung von dem Zustand, der durch die Parameter vorgegeben ist, auftritt. Hierzu können andere Sensoreinrichtungen verwendet werden, als beim erstmaligen Einmessen des Ausströmersystems 10. Über die Sensoreinrichtungen, die im Fahrzeug vernetzt sind oder mobile Sensoren z.B. des Passagiers (biometrische Daten von "Smart Devices" oder Implantaten) oder individuelle Empfindung des Passagiers, wird jedoch eine Abweichung von einem vorgegebenen Wert festgestellt und es erfolgt eine Anpassung der Luftausströmer 40 - 45 oder zumindest einem der Luftausströmer 40 - 54 gemäß den vorangehenden Schritten S4 - S8, bis die an mindestens einem Messpunkt M1 - M18 erfassten Werte den durch die Parameter vorgegebenen Werte entsprechen und die geänderten Stellungen der Luftausströmer 40 - 54 gespeichert worden sind.

Eine ständige Überprüfung der Stellungen der Luftausströmer 40 - 54 des Ausströmersystems 10 wird für die Klimatisierungs- und Belüftungsszenarien fortlaufend durchgeführt. Daher kann im Betrieb des Ausströmersystems 10 ein definiertes Klimatisierungs- und Belüftungsszenario aufrechterhalten werden.

### Bezugszeichenliste

- 10: Ausströmersystem
- 12: Fahrzeuginnenraum
- 20: Sitzreihe
- 22: Fahrersitz
- 24: Beifahrersitz
- 30: Sitzreihe
- 32: Sitz
- 34: Sitz
- 36: Sitz
- 40: Luftausströmer
- 42: Luftausströmer
- 44: Luftausströmer
- 50: Luftausströmer
- 52: Luftausströmer
- 54: Luftausströmer
- 60: Messebene
- 100: Ablaufdiagramm
- M₁ - M₁₈: Messpunkt

## Patentansprüche

1. Verfahren zur Einmessung und zum Betrieb eines Ausströmersystems (10) eines Fahrzeugs, aufweisend eine Klimatisierungseinrichtung und mehrere ansteuerbare Luftausströmer (40; 42; 44; 50; 52; 54), wobei bei erster Inbetriebnahme des Fahrzeugs ein Einmessen der Luftausströmer (40; 42; 44; 50; 52; 54) durchgeführt wird, um vordefinierte Klimatisierungs- und Belüftungsszenarien für verschiedene Fahrzeugbelegungen zu definieren, die entsprechend bei Eintreten der Klimatisierungs- und Belüftungsszenarien aufgerufen werden, wobei das Einmessen folgende Schritte aufweist:
- Definieren von Parametern für verschiedene Klimatisierungs- und Belüftungsszenarien, wobei die Parameter mindestens eine Zustandsgröße eines Luftstroms an mindestens einem Messpunkt (M₁ - M₁₈) im Fahrzeug umfassen,
- Ausgeben eines Luftstroms durch die Klimatisierungseinrichtung,
- Ansteuern jedes Luftausströmers (40; 42; 44; 50; 52; 54) einzeln,
- Messen der mindestens einen Zustandsgröße des Luftstroms an dem mindestens einen Messpunkt (M₁ - M₁₈),
- Verändern der Luftablenkung des über die Luftausströmer (40; 42; 44; 50; 52; 54) ausgegebenen Luftstroms und/oder Verändern der mindestens einen Zustandsgröße des ausgegebenen Luftstroms,
- Erneutes Messen der mindestens einen Zustandsgröße des Luftstroms an dem mindestens einen Messpunkt (M₁ - M₁₈), wobei mindestens die Ablenkung des ausgegebenen Luftstroms der Luftausströmer (40; 42; 44; 50; 52; 54) schrittweise verändert wird, bis mindestens alle für das jeweilige Klimatisierungs- und Belüftungsszenario relevanten Stellungen der Luftausströmer (40; 42; 44; 50; 52; 54) durchlaufen und für alle Stellungen die mindestens eine Zustandsgröße des Luftstroms an dem mindestens einen Messpunkt (M₁ - M₁₈) erfasst worden ist, wobei die Stellung der Luftausströmer (40; 42; 44; 50; 52; 54) und die mindestens eine Zustandsgröße der ausgegebenen Luft in der Steuereinheit für ein Klimatisierungs- und Belüftungsszenario hinterlegt werden, welche den für das entsprechende Klimatisierungs- und Belüftungsszenario vorgegebenen Parametern entsprechen,
- gemeinsames Verstellen der Luftausströmer (40; 42; 44; 50; 52; 54) nach der Ermittlung der Zustandsgrößen für jeden einzelnen Luftausströmer (40; 42; 44; 50; 52; 54) an dem mindestens einen Messpunkt (M₁ - M₁₈), wobei anhand der für die einzelnen Luftausströmer (40; 42; 44; 50; 52; 54) ermittelten Stellungen und Zustandsgrößen für definierte Klimatisierungs- und Belüftungsszenarien Stellungen der Luftausströmer (40; 42; 44; 50; 52; 54) und Bereiche der mindestens einen Zustandsgröße des ausgegebenen Luftstroms im Vorfeld ermittelt werden, die für diese Klimatisierungs- und Belüftungsszenarien zutreffend sein werden, und
- Erfassen der mindestens einen Zustandsgröße für die vorausgewählten Stellungen der Luftausströmer (40; 42; 44; 50; 52; 54) an den jeweiligen Messpunkten (M₁ - M₁₈), bis die mindestens eine Zustandsgröße den vorgegebenen Parametern entspricht, wobei die Stellung der Luftausströmer (40; 42; 44; 50; 52; 54) dann gespeichert wird und beim Auftreten einer entsprechenden Fahrzeugbelegung das zugehörige Belüftungsszenario im Betrieb des Fahrzeugs aufgerufen und die Luftausströmer (40; 42; 44; 50; 52; 54) entsprechend angesteuert werden.

2. Verfahren nach Anspruch 1, wobei die mindestens eine Zustandsgröße die Temperatur, die Geschwindigkeit, die Luftfeuchtigkeit, den Schadstoffgehalt, den Duftstoffgehalt und/oder die Menge der über den mindestens einen Luftausströmer (40; 42; 44; 50; 52; 54) ausgegebenen Luft umfasst und zusätzlich eine weitere Zustandsgröße der ausgegebenen Luft schrittweise verändert und gemessen wird.

3. Verfahren nach Anspruch 1 oder 2, wobei nach Maßgabe des jeweiligen, vorhandenen Klimatisierungs- und Belüftungsszenarios, welches unter Verwendung von Sensoreinrichtungen durch die Steuereinheit bestimmt wird, die Klimatisierungseinrichtung und der mindestens eine Luftausströmer (40; 42; 44; 50; 52; 54) gemäß der für das entsprechende Klimatisierungs- und Belüftungsszenario hinterlegten Stellung des mindestens einen Luftausströmers (40; 42; 44; 50; 52; 54) und der mindestens einen Zustandsgröße der ausgegebenen Luft angesteuert werden.

4. Verfahren nach Anspruch 3, wobei die für verschiedene Klimatisierungs- und Belüftungsszenarien definierten Parameter und die hierzu ermittelten Einstellungen der Klimatisierungseinrichtung und des mindestens einen Luftausströmers (40; 42; 44; 50; 52; 54) in einen mit der Steuereinheit verbundenen Speicher hinterlegt werden, wobei im Betrieb des Ausströmersystems Änderungen an der Ausrichtung des über den mindestens einen Luftausströmer (40; 42; 44; 50; 52; 54) ausgegebenen Luftstroms und/oder der mindestens einen Zustandsgröße der ausgegebenen Luft für ein Klimatisierungs- und Belüftungsszenario vorgenommen werden, wenn die an mindestens einem Messpunkt (M₁ - M₁₈) erfassten Werte nicht mehr den durch das entsprechende Klimatisierungs- und Belüftungsszenario vorgegebenen Parametern entsprechen, und die Einstellungen dieser Änderungen die Stellung des mindestens einen Luftausströmers (40; 42; 44; 50; 52; 54) und die mindestens eine Zustandsgröße der ausgegebenen Luft für das Klimatisierungs- und Belüftungsszenario ersetzen.

5. Verfahren nach einem der Ansprüche 1 bis 4, wobei manuelle Eingaben einer Bedienperson zur Veränderung der Zustände eines Klimatisierungs- und Belüftungsszenarios als Änderung der gespeicherten Einstellungen für das entsprechende Klimatisierungs- und Belüftungsszenario übernommen werden, wenn eine Überschreibung durch die Bedienperson aktiviert wird und/oder die Veränderungen dieses Klimatisierungs- und Belüftungsszenarios mit im Wesentlichen gleichen Veränderungen eine festlegbare Häufigkeit übersteigen.

6. Verfahren nach Anspruch 4 oder 5, wobei eine Änderung, die für eine definierte Einstellung, welche in den gespeicherten Klimatisierungs- und Belüftungsszenarien enthalten ist, in mindestens zwei Klimatisierungs- und Belüftungsszenarien vorgenommen worden sind und eine Änderung der gespeicherten Einstellungen verursacht haben, in entsprechender Weise für alle weiteren Klimatisierungs- und Belüftungsszenarien übernommen und die geänderten Einstellungen gespeichert werden.

7. Verfahren nach einem der Ansprüche 1 bis 6, wobei während der Änderung der Ablenkung der ausgegebenen Luft über den mindestens einen Luftausströmer (40; 42; 44; 50; 52; 54) eine Luftablenkung in einer Richtung unterbrochen wird, wenn eine zunehmende Abweichung der an dem mindestens einen Messpunkt (M₁ - M₁₈) gemessenen mindestens einen Zustandsgröße von den für ein Klimatisierungs- und Belüftungsszenario zugehörigen Parametern durch die Steuereinheit festgestellt wird.

8. Verfahren nach einem der Ansprüche 1 bis 7, wobei die mindestens eine Zustandsgröße an einem ersten Messpunkt (M₁ - M₁₈) und an einem zweiten Messpunkt (M₁ - M₁₈) gemessen wird und anschließend eine Änderung der Stellung des mindestens einen Luftausströmers (40; 42; 44; 50; 52; 54) durchgeführt wird, oder für einen ersten Messpunkt (M₁ - M₁₈) die mindestens eine Zustandsgröße gemessen und anschließend eine Änderung der Stellung des mindestens einen Luftausströmers (40; 42; 44; 50; 52; 54) durchgeführt wird und danach für mindestens einen zweiten Messpunkt (M₁ - M₁₈) die mindestens eine Zustandsgröße gemessen und anschließend eine Änderung der Stellung des mindestens einen Luftausströmers (40; 42; 44; 50; 52; 54) durchgeführt wird.

9. Verfahren nach einem der Ansprüche 1 bis 8, wobei zur Ermittlung der Einstellungen für verschiedene Klimatisierungs- und Belüftungsszenarien ein Messsystem verwendet wird, welches einen Laserscanner, eine Kamera, einen Temperaturfühler, einen Strömungsmesser, einen Sensor von Smart Devices und/oder Sensoren zur Detektion des vitalen und/oder psychischen Empfindens eines Passagiers aufweist.

10. Ausströmersystem für ein Fahrzeug, das dazu ausgebildet ist ein Verfahren zum Einmessen und zum Betrieb des Ausströmersystems nach einem der Ansprüche 1 bis 9 auszuführen, mindestens aufweisend einen Luftausströmer (40; 42; 44; 50; 52; 54), eine Steuereinheit, einen Speicher, eine Klimatisierungseinrichtung und Sensoreinrichtungen, wobei
- in dem Speicher Parameter mindestens eines Klimatisierungs- und Belüftungsszenarios und Einstellungen des mindestens einen Luftausströmers (40; 42; 44; 50; 52; 54) und der Klimatisierungseinrichtung für verschiedene Klimatisierungs- und Belüftungsszenarien hinterlegt sind,
- die Steuereinheit dazu ausgebildet ist, anhand von Messungen durch die Sensoreinrichtungen an mindestens einem Messpunkt (M₁ - M₁₈) die Einstellungen für den mindestens einen Luftausströmer (40; 42; 44; 50; 52; 54) und die Klimatisierungseinrichtung zu ermitteln und die Einstellungen anzupassen,
- die Steuereinheit dazu ausgebildet ist, die Einstellungen in dem Speicher zu hinterlegen, welche den Parametern für die verschiedenen Klimatisierungs- und Belüftungsszenarien entsprechen, und
- die Klimatisierungseinrichtung und der mindestens eine Luftausströmer (40; 42; 44; 50; 52; 54) nach Maßgabe der gespeicherten Einstellungen betreibbar sind.

## Claims

1. Method for calibration and operation of a vent system (10) of a vehicle, comprising air-conditioning equipment and a plurality of controllable air vents (40; 42; 44; 50; 52; 54), wherein calibration of the air vents (40; 42; 44; 50; 52; 54) is carried out when the vehicle is first placed in operation so as to define for different vehicle occupancies predefined air-conditioning and ventilation scenarios which can be correspondingly called up when the air-conditioning and ventilation scenarios occur, wherein the calibration comprises the following steps:
- defining parameters for different air-conditioning and ventilation scenarios, wherein the parameters comprise at least one state variable of an air flow at at least one measuring point (M₁ - M₁₈) in the vehicle,
- issuing an air flow through the air-conditioning equipment,
- controlling each air vent (40; 42; 44; 50; 52; 54) individually,
- measuring the at least one state variable of the air flow at the at least one measuring point (M₁ - M₁₈),
- changing the air deflection of the air flow issued by way of the air vents (40; 42; 44; 50; 52; 54) and/or changing the at least one state variable of the issued air flow,
- fresh measurement of the at least one state variable of the air flow at the at least one measuring point (M₁ - M₁₈), wherein at least the deflection of the issued air flow of the air vents (40; 42; 44; 50; 52; 54) is changed in steps until at least all settings of the air vents (40; 42; 44; 50; 52; 54) relevant to the respective air-conditioning and ventilation scenario have been run through and the at least one state variable of the air flow has been detected at the at least one measuring point (M₁ - M₁₈) for all settings, wherein the setting of the air vents (40; 42; 44; 50; 52; 54) and the at least one state variable of the issued air for an air-conditioning and ventilation scenario, which setting and variable correspond with the parameters predetermined for the corresponding air-conditioning and ventilation scenario, are filed in the control unit,
- adjustment of the air vents (40; 42; 44; 50; 52; 54) in common after determination of the state variables for each individual air vent (40; 42; 44; 50; 52; 54) at the at least one measuring point (M₁ - M₁₈), wherein, on the basis of the settings and state variables determined for the individual air vents (40; 42; 44; 50; 52; 54) for defined air-conditioning and ventilation scenarios, settings of the air vents (40; 42; 44; 50; 52; 54) and ranges of the at least one state variable of the issued air flow, which will be relevant to these air-conditioning and ventilation scenarios, are determined in the foreground, and
- detecting the at least one state variable for the previously selected settings of the air vents (40; 42; 44; 50; 52; 54) at the respective measuring points (M₁ - M₁₈) until the at least one state variable corresponds with the predetermined parameters, wherein the setting of the air vents (40; 42; 44; 50; 52; 54) is then stored and when a corresponding vehicle occupancy occurs the associated ventilation scenario is called up in operation of the vehicle and the air vents (40; 42; 44; 50; 52; 54) are correspondingly controlled.

2. Method according to claim 1, wherein the at least one state variable comprises the temperature, the velocity, the humidity, the noxious substance content, the aromatics content and/or the quantity of air issued by way of the at least one air vent (40; 42; 44; 50; 52; 54) and in addition a further state variable of the issued air is changed in steps and measured.

3. Method according to claim 1 or 2, wherein, depending on the respectively present air-conditioning and ventilation scenario determined by the control unit with use of sensor devices, the air-conditioning equipment and the at least one air vent (40; 42; 44; 50; 52; 54) are controlled in accordance with the setting, which is filed for the corresponding air-conditioning and ventilation scenario, of the at least one air vent (40; 42; 44; 50; 52; 54) and the at least one state variable of the issued air.

4. Method according to claim 3, wherein the parameters defined for the different air-conditioning and ventilation scenarios and the settings, which are determined with respect thereto, of the air-conditioning equipment and the at least one air vent (40; 42; 44; 50; 52; 54) are filed in a memory connected with the control unit, wherein in operation of the vent system changes to the orientation of the air flow, which is issued by way of the at least one air vent (40; 42; 44; 50; 52; 54), and/or the at least one state variable of the issued air for an air-conditioning and ventilation scenario are undertaken when the values detected at at least one measuring point (M₁ - M₁₈) no longer correspond with the parameters predetermined by the corresponding air-conditioning and ventilation scenario, and the settings of these changes replace the setting of the at least one air vent (40; 42; 44; 50; 52; 54) and the at least one state variable of the issued air for the air-conditioning and ventilation scenario.

5. Method according to any one of claims 1 to 4, wherein manual inputs of an operator are undertaken for changing the states of an air-conditioning and ventilation scenario as change of the stored settings for the corresponding air-conditioning and ventilation scenario when overwriting by the operator is activated and/or the changes of this air-conditioning and ventilation scenario with substantially the same changes exceed a definable frequency.

6. Method according to claim 4 or 5, wherein a change which has been undertaken for a defined setting - which is present in the stored air-conditioning and ventilation scenarios - in at least two air-conditioning and ventilation scenarios and has caused a change in the stored settings is undertaken in corresponding manner for all further air-conditioning and ventilation scenarios and the changed settings are stored.

7. Method according to any one of claims 1 to 6, wherein during the change in the deflection of the issued air by way of the at least one air vent (40; 42; 44; 50; 52; 54) an air deflection in a direction is interrupted when an increasing departure of the at least one state variable, which is measured at the at least one measuring point (M₁ - M₁₈), from the parameters associated with an air-conditioning and ventilation scenario is ascertained by the control unit.

8. Method according to any one of claims 1 to 7, wherein the at least one state variable is measured at a first measuring point (M₁ - M₁₈) and at a second measuring point (M₁ - M₁₈) and subsequently a change in the setting of the at least one air vent (40; 42; 44; 50; 52; 54) is carried out or the at least one state variable is measured for a first measuring point (M₁ - M₁₈) and subsequently a change in the setting of the at least one air vent (40; 42; 44; 50; 52; 54) is carried out and thereafter the at least one second state variable is measured for at least one second measuring point (M₁ - M₁₈) and subsequently a change in the setting of the at least one air vent (40; 42; 44; 50; 52; 54) is carried out.

9. Method according to any one of claims 1 to 8, wherein for determination of the settings for different air-conditioning and ventilation scenarios use is made of a measuring system which comprises a laser scanner, a cameral, a temperature detector, a flow meter, a sensor of Smart devices and/or sensors for detection of the vital and/or psychological sensitivity of a passenger.

10. Vent system for a vehicle, which system is configured to perform a method for calibration and operation of the vent system according to any one of claims 1 to 9 and at least comprises an air vent (40; 42; 44; 50; 52; 54), a control unit, a memory, air-conditioning equipment and sensor devices, wherein
- parameters of at least one air-conditioning and ventilation scenario and settings of the at least one air vent (40; 42; 44; 50; 52; 54) and of the air-conditioning equipment for different air-conditioning and ventilation scenarios are filed in the memory,
- the control unit is configured for the purpose of determining the settings for the at least one air vent (40; 42; 44; 50; 52; 54) and the air-conditioning equipment on the basis of measurements by the sensor devices at at least one measuring point (M₁ - M₁₈) and of adapting the settings,
- the control unit is configured for the purpose of filing in the memory the settings which correspond with the parameters for the different air-conditioning and ventilation scenarios and
- the air-conditioning equipment and the at least one air vent (40; 42; 44; 50; 52; 54) are operable in dependence on the stored settings.

## Revendications

1. Procédé de mesure et de fonctionnement d'un système d'échappement et système d'échappement (10) d'un véhicule présentant un dispositif de climatisation et plusieurs diffuseurs d'air (40 ; 42 ; 44 ; 50 ; 52 ; 54), pouvant être commandés, où un réglage des diffuseurs d'air (40 ; 42 ; 44 ; 50 ; 52 ; 54) peut être effectué lors de la première mise en service du véhicule afin de configurer des scénarios de climatisation et de ventilation prédéfinis pour différentes occupations du véhicule qui sont appelés en conséquence lorsque les scénarios de climatisation et de ventilation se produisent, la mesure présentant les étapes suivantes :
- définir des paramètres pour différents scénarios de climatisation et de ventilation, les paramètres comprenant au moins une variable d'état d'un écoulement d'air en au moins un point de mesure (M₁ - M₁₈) dans le véhicule ;
- émettre un flux d'air à travers le dispositif de climatisation ;
- commander chaque diffuseur d'air (40 ; 42 ; 44 ; 50 ; 52 ; 54) individuellement ;
- mesurer la au moins une variable d'état du flux d'air en au moins un point de mesure (M₁ - M₁₈) ;
- modifier la déviation de l'air du flux distribué par les diffuseurs d'air (40 ; 42 ; 44 ; 50 ; 52 ; 54) et/ou modifier la au moins une variable d'état du flux d'air distribué ;
- mesurer à nouveau la au moins une variable d'état du flux d'air en le au moins un point de mesure (M₁ - M₁₈) où au moins la déviation du flux d'air distribué par les diffuseurs d'air (40 ; 42 ; 44 ; 50 ; 52 ; 54) est modifiée progressivement jusqu'à ce qu'au moins toutes les positions des diffuseurs d'air (40 ; 42 ; 44 ; 50 ; 52 ; 54) pertinentes pour le scénario de climatisation et de ventilation respectif aient été parcourues et que, pour toutes les positions, la au moins une variable d'état du flux d'air ait été saisie en le au moins un point de mesure (M₁ - M₁₈), la position des diffuseurs d'air (40 ; 42 ; 44 ; 50 ; 52 ; 54) et la au moins une variable d'état de l'air de sortie sont enregistrées dans l'unité de commande pour un scénario de climatisation et de ventilation, lesquelles correspondent aux paramètres prédéfinis pour le scénario de climatisation et de ventilation correspondant ;
- le réglage commun des diffuseurs d'air (40 ; 42 ; 44 ; 50 ; 52 ; 54) après la détermination des variables d'état pour chacun des diffuseurs d'air (40 ; 42 ; 44 ; 50 ; 52 ; 54) au niveau du au moins un point de mesure (M₁ - M₁₈), sachant qu'au moyen des positions et des variables d'état déterminées pour chacun des diffuseurs d'air (40 ; 42 ; 44 ; 50 ; 52 ; 54) pour des scénarios de climatisation et de ventilation définis, il est déterminé à l'avance des positions des diffuseurs d'air (40 ; 42 ; 44 ; 50 ; 52 ; 54) et des plages de la au moins une variable d'état du flux d'air de sortie qui seront applicables pour ces scénarios de climatisation et de ventilation, et
- enregistrer la au moins une variable d'état pour les positions présélectionnées des diffuseurs d'air (40 ; 42 ; 44 ; 50 ; 52 ; 54) aux points de mesure respectifs (M₁ - M₁₈), jusqu'à ce que la au moins une grandeur d'état corresponde aux paramètres prédéfinis, où la position des diffuseurs d'air (40 ; 42 ; 44 ; 50 ; 52 ; 54) est alors enregistrée et, lorsqu'une occupation correspondante du véhicule est constatée, le scénario de ventilation correspondant est appelé dans le fonctionnement du véhicule et les diffuseurs d'air (40 ; 42 ; 44 ; 50 ; 52 ; 54) sont commandés en conséquence.

2. Procédé selon la revendication 1, où la au moins une variable d'état comprend la température, la vitesse, l'humidité de l'air, la teneur en polluants, la teneur en parfum et/ou la quantité d'air émise par le au moins un diffuseur d'air (40 ; 42 ; 44 ; 50 ; 52 ; 54) et, en outre, une autre variable d'état de l'air de sortie est modifiée et mesurée progressivement.

3. Procédé selon la revendication 1 ou 2, où, en fonction du scénario de climatisation et de ventilation existant respectif, qui est déterminé par l'unité de commande moyennant l'utilisation de dispositifs de détection, le dispositif de climatisation et le au moins un diffuseur d'air (40 ; 42 ; 44 ; 50 ; 52 ; 54) en fonction de la position du au moins un diffuseur d'air (40 ; 42 ; 44 ; 50 ; 52 ; 54) définie pour le scénario de climatisation et de ventilation correspondant et de la au moins une variable d'état de l'air distribué.

4. Procédé selon la revendication 3, où les paramètres définis pour différents scénarios de climatisation et de ventilation et les réglages déterminés à cet effet du dispositif de climatisation et du au moins un diffuseur d'air (40 ; 42 ; 44 ; 50 ; 52 ; 54) sont enregistrés dans une mémoire associée à l'unité de commande, où, pendant le fonctionnement du système d'échappement, des modifications sont apportées à l'orientation du flux d'air distribué par le au moins un diffuseur d'air (40 ; 42 ; 44 ; 50 ; 52 ; 54) et/ou à au moins une variable d'état de l'air distribué pour un scénario de climatisation et de ventilation, lorsque les valeurs relevées en au moins un point de mesure (M₁ - M₁₈) ne correspondent plus aux paramètres prédéfinis par le scénario de climatisation et de ventilation correspondant, et les réglages de ces modifications remplacent la position du au moins un diffuseur d'air (40 ; 42 ; 44 ; 50 ; 52 ; 54) et la au moins une variable d'état de l'air distribué pour le scénario de climatisation et de ventilation.

5. Procédé selon l'une des revendications 1 à 4, où les entrées manuelles d'un opérateur pour modifier les conditions d'un scénario de climatisation et de ventilation sont prises en compte en tant que modification des réglages enregistrés pour le scénario de climatisation et de ventilation correspondant, lorsqu'un écrasement par l'opérateur est activé et/ou lorsque les modifications de ce scénario de climatisation et de ventilation avec des modifications essentiellement identiques dépassent une fréquence qui peut être déterminée.

6. Procédé selon la revendication 4 ou 5, où une modification qui, pour un réglage défini contenu dans les scénarios de climatisation et de ventilation enregistrés, a été effectué dans au moins deux scénarios de climatisation et de ventilation et a provoqué une modification des réglages enregistrés, est reprise de manière correspondante pour tous les autres scénarios de climatisation et de ventilation et les réglages modifiés sont enregistrés.

7. Procédé selon l'une des revendications 1 à 6, où, pendant la modification de la déviation de l'air distribué via le au moins un diffuseur d'air (40 ; 42 ; 44 ; 50 ; 52 ; 54) une déviation de l'air dans une direction est interrompue lorsqu'une déviation croissante de la au moins une variable d'état mesurée au niveau du au moins un point de mesure (M₁ - M₁₈) par rapport aux paramètres correspondants à un scénario de climatisation et de ventilation est détectée par l'unité de commande.

8. Procédé selon l'une des revendications 1 à 7, où la au moins une variable d'état est mesurée en un premier point de mesure (M₁ - M₁₈) et en un deuxième point de mesure (M₁ - M₁₈), puis une modification de la position du au moins un diffuseur d'air (40 ; 42 ; 44 ; 50 ; 52 ; 54) est effectuée, ou pour un premier point de mesure (M₁ - M₁₈), la au moins une variable d'état est mesurée puis une modification de la position du au moins un diffuseur d'air (40 ; 42 ; 44 ; 50 ; 52 ; 54) est effectuée et ensuite pour au moins un deuxième point de mesure (M₁ - M₁₈), la au moins une variable d'état est mesurée puis une modification de la position du au moins un diffuseur d'air (40 ; 42 ; 44 ; 50 ; 52 ; 54) est effectuée.

9. Procédé selon l'une des revendications 1 à 8, où, pour déterminer les réglages pour différents scénarios de climatisation et de ventilation, est utilisé un système de mesure qui comporte un scanner laser, une caméra, un capteur de température, un débitmètre, un capteur de dispositifs intelligents et/ou des capteurs pour détecter la perception vitale et/ou psychique d'un passager.

10. Système d'échappement pour un véhicule conçu pour exécuter un procédé de mesure et de fonctionnement du système d'échappement selon l'une des revendications 1 à 9, comprenant au moins un diffuseur d'air (40 ; 42 ; 44 ; 50 ; 52 ; 54), une unité de commande, une mémoire, un dispositif de climatisation et des dispositifs de détection, où
- sont enregistrés dans la mémoire les paramètres d'au moins un scénario de climatisation et de ventilation et les réglages du au moins un diffuseur d'air (40 ; 42 ; 44 ; 50 ; 52 ; 54) et du dispositif de climatisation pour différents scénarios de climatisation et de ventilation,
- l'unité de commande est conçue pour déterminer, à l'aide de mesures effectuées par les dispositifs de détection en au moins un point de mesure (M1 - Ml8), les réglages pour le au moins un diffuseur d'air (40 ; 42 ; 44 ; 50 ; 52 ; 54) et le dispositif de climatisation et pour adapter les réglages,
- l'unité de commande est conçue pour enregistrer dans la mémoire les réglages qui correspondent aux paramètres pour les différents scénarios de climatisation et de ventilation, et
- le dispositif de climatisation et le au moins un diffuseur d'air (40 ; 42 ; 44 ; 50 ; 52 ; 54) peuvent être actionnés conformément aux réglages enregistrés.
